# EUROPÄISCHE PATENTSCHRIFT

(11) **EP 2 499 031 B1**
(45) Veröffentlichungstag und Bekanntmachung des Hinweises auf die Patenterteilung: **06.11.2019**
(21) Anmeldenummer: 10779522.1
(22) Anmeldetag: 09.11.2010
(51) Int. Cl.: B60T 17/00, B01D 46/00, F15B 21/04

(54) **LUFTAUFBEREITUNGSEINRICHTUNG**
AIR PROCESSING DEVICE
DISPOSITIF DE TRAITEMENT DE L'AIR

(30) Priorität: 11.11.2009 DE 102009052787
(43) Veröffentlichungstag der Anmeldung: 19.09.2012
(73) Patentinhaber: KNORR-BREMSE Systeme für Nutzfahrzeuge GmbH, 80809 München (DE)
(72) Erfinder: EIDENSCHINK, Rainer, 81927 München (DE); SCHÄBEL, Stefan, 80804 München (DE)
(74) Vertreter: Mattusch, Gundula
(86) Internationale Anmeldenummer: PCT/EP2010/067100
(87) Internationale Veröffentlichungsnummer: WO 2011/058004

(56) Entgegenhaltungen:
- EP-A1- 0 210 363
- EP-A1- 2 105 186
- DE-A1-102006 037 311
- US-A- 5 762 671

## Beschreibung

Die Erfindung betrifft eine Luftaufbereitungseinrichtung für ein Nutzfahrzeug mit einem Gehäuse, das zum Verbinden mit einer Lufttrocknereinrichtung über einen Bajonettverschluss eingerichtet ist.

Derartige gattungsgemäße Luftaufbereitungseinrichtungen kommen in Nutzfahrzeugen, insbesondere Lastkraftwagen und Traktoren, zum Einsatz. Diese verfügen häufig über einen oder mehrere Druckluftverbraucher, die mit aufbereiteter Druckluft versorgt werden müssen. Typische Druckluftverbraucher sind beispielsweise ein Druckluftbremssystem, eine Luftfederung oder auch ein Feststellbremssystem. Zum Versorgen des Nutzfahrzeuges mit Druckluft ist eine Druckluftversorgungseinrichtung vorgesehen, die insbesondere über eine Luftaufbereitungseinrichtung verfügt. Diese Luftaufbereitungseinrichtung soll insbesondere getrocknete und gereinigte Luft zur Verfügung stellen. Dazu ist eine Luftaufbereitungseinrichtung in der Regel mit einer Lufttrocknereinrichtung versehen, welche häufig auch über Filtereinrichtungen zum Filtern der Luft verfügt. Um ein leichtes Warten beziehungsweise Ersetzen der Filter und beispielsweise von Trockenmittel zu ermöglichen, wird in der Regel eine Lufttrocknerpatrone als Lufttrocknereinrichtung verwendet, die mit der Luftaufbereitungseinrichtung verbunden oder in diese eingesetzt werden kann. Zum Verbinden der Lufttrocknereinrichtung mit der Luftaufbereitungsanlage kann dabei eine Bajonettverbindung beziehungsweise ein Bajonettverschluss eingesetzt werden. Diese verbindet die Lufttrocknereinrichtung mit der Luftaufbereitungseinrichtung über eine Steck-Dreh-Verbindung. Beispiele für Bajonettverschlüsse zum Verbinden von Lufttrocknerpatronen mit Luftaufbereitungsanlagen sind in der Offenlegungsschrift DE 10 2006 037 311 A1 beschrieben, auf die hiermit explizit Bezug genommen wird.

Das Dokument EP 0 210 363 A1 beschreibt einen Lufttrockner für Druckluftanlagen mit einem mit einem Lufttrocknergehäuse verschraubbaren Deckel und einem diesen am Umfang übergreifenden Außenmantel, die mittels eines Bajonettverschlusses miteinander verbunden ist sind. Es ist eine Sicherungsscheibe vorgesehen, um den Bajonettring gegen unerwünschtes Lösen zu sichern.

Beim Entfernen beziehungsweise Austauschen einer Lufttrocknereinrichtung oder einer Lufttrocknerpatrone kann es allerdings vorkommen, dass die Luftaufbereitungseinrichtung und damit auch die Lufttrocknerpatrone noch unter Druck stehen. Beim Aufdrehen eines Bajonettverschlusses kann sich dabei durch den hohen Druck in der Luftaufbereitungseinrichtung der Bajonettverschluss schlagartig lösen, wodurch umstehende Personen und insbesondere die Person gefährdet werden, welche die Lufttrocknerpatrone entfernt. Außerdem kann bei nicht korrekter Montage des Bajonettverschlusses auch ein selbstständiges Lösen des Bajonettverschlusses erfolgen, was ebenfalls zu erheblichen Sicherheitsrisiken etwa im Fahrbetrieb führt.

Der Erfindung liegt die Aufgabe zugrunde, Sicherheitsrisiken des Standes der Technik auszuräumen.

Diese Aufgabe wird auf der Grundlage der gattungsgemäßen Luftaufbereitungseinrichtung dadurch gelöst, dass eine am Gehäuse angebrachte oder anbringbare Sicherungseinrichtung zum Sichern des Bajonettverschlusses am Gehäuse vorgesehen ist. Insbesondere kann die Sicherungseinrichtung den Bajonettverschluss beziehungsweise einen Bajonettring des Bajonettverschlusses gegen eine Drehung in eine Öffnungsdrehrichtung sichern. Durch die Verwendung einer derartigen Sicherungseinrichtung, die am Gehäuse befestigt oder befestigbar sein kann, wird verhindert, dass sich der Bajonettverschluss unter Druck unerwünscht oder schlagartig lösen kann. Weiterhin ist es nicht erforderlich, in den Bajonettring beziehungsweise dem Bajonettverschluss Aufnahmen oder Löcher zu bohren, um die Sicherungseinrichtung aufzunehmen, was die strukturelle Integrität des Bajonettverschlusses wahrt.

Insbesondere kann vorgesehen sein, dass die Sicherungseinrichtung lösbar am Gehäuse befestigt oder befestigbar ist, was das Sichern und Lösen des Bajonettverschlusses erleichtert.

Es ist vorteilhaft, wenn in einem gesicherten Zustand des Bajonettverschlusses die Sicherungseinrichtung eine Drehung eines Bajonettrings des Bajonettverschlusses in eine Drehrichtung blockiert. Besonders vorteilhaft ist dabei, wenn in dem gesicherten Zustand eine Nase des Bajonettverschlusses an die Sicherungseinrichtung anstößt. Somit werden schon vorhandene Strukturen eines Bajonettverschlusses wie die Nase verwendet, so dass zum Umsetzen der Erfindung keine weiteren Bearbeitungsschritte am Bajonettverschluss notwendig sind. Bei der Nase kann es sich um eine Bajonettnase des Bajonettverschlusses, insbesondere eine Bajonettnase eines Bajonettrings handeln, es kann aber auch vorgesehen sein, dass eine nicht als Bajonettnase dienende Nase wie ein Greifvorsprung durch die Sicherungseinrichtung blockiert wird.

Bei einer Ausführungsform ist vorgesehen, dass die Sicherungseinrichtung als eine Verschlussschraube ausgebildet ist. Eine Verschlussschraube bietet einen zuverlässigen Halt und eine gute Sicherung des Bajonettverschlusses. Es können auch weitere Formen von Sicherungseinrichtungen Verwendung finden, beispielsweise kann die Sicherungseinrichtung als Splint oder Bolzen ausgebildet sein.

Es ist besonders vorteilhaft, wenn die Verschlussschraube einen Verschlussschraubenkopf aufweist, der in einem gesicherten Zustand derart angeordnet ist, dass er eine Bewegung einer Nase eines Bajonettsrings des Bajonettverschlusses in eine Drehrichtung blockiert. Insbesondere kann vorgesehen sein, dass der Verschlussschraubenkopf in einem gesicherten Zustand an die Nase anstößt. Ein Verschlussschraubenkopf lässt sich leicht dazu ausbilden, die Nase zumindest in eine Drehrichtung zu blockieren.

Bei einer bevorzugten Weiterbildung ist im Gehäuse eine Bohrung zur Aufnahme der Sicherungseinrichtung vorgesehen. Diese Bohrung kann insbesondere als eine Gewindebohrung ausgebildet sein, um beispielsweise eine Verschlussschraube aufzunehmen. Durch eine solche Bohrung bietet sich eine sichere Halterung für die Sicherungseinrichtung im Gehäuse.

Dabei ist es besonders zweckmäßig, wenn die Bohrung bis in einen im Betrieb unter Druck stehenden Innenraum der Luftaufbereitungseinrichtung reicht. Vorteilhafterweise umfasst dann die Sicherungseinrichtung eine Dichtung, die im montierten Zustand den Innenraum der Luftaufbereitungseinrichtung gegen einen Druckluftverlust abdichtet. Andererseits ist es in diesem Zusammenhang vorteilhaft, wenn bei nicht montierter Sicherungseinrichtung der Innenraum nicht abgedichtet ist. Somit kann in diesem Fall die Luftaufbereitungseinrichtung die Druckluftverbraucher nicht mit Druckluft versorgen, da über die Verbindung des Innenraums mit einem Außenbereich unter Druck stehende Luft nach außen entweicht. Bei nicht korrekt montierter und gesicherter Lufttrocknereinrichtung lässt sich also die Luftaufbereitungseinrichtung nicht unter Druck setzen, was mit dem Betreiben einer falsch montierten Luftaufbereitungseinrichtung verbundene Sicherheitsrisiken minimiert.

Es ist von besonderem Vorteil, wenn die Sicherungseinrichtung einen oder mehrere Entlüftungskanäle aufweist. Diese sind zweckmäßigerweise derart angeordnet, dass sie beim Lösen der Sicherungseinrichtung ein Entlüften der Luftaufbereitungseinrichtung erlauben. Dadurch wird erreicht, dass dann, wenn beim anfänglichen Lösevorgang der Sicherungseinrichtung noch Druck in der Luftaufbereitungseinrichtung vorhanden ist, dieser über den oder die Entlüftungskanäle entweichen kann. Wird der Lösevorgang dann fortgesetzt, steht die Luftaufbereitungseinrichtung nicht mehr unter Druck, wodurch sich die Sicherungseinrichtung ohne das Risiko, durch einen hohen Druck schlagartig entfernt zu werden, sicher weiter lösen lässt.

Es kann vorgesehen sein, dass die Sicherungseinrichtung eine Sollbruchstelle aufweist. Diese kann bei unsachgemäßem Montieren zu einem Bruch der Sicherungseinrichtung führen. Somit wird verhindert, dass die Sicherungseinrichtung inkorrekt und mit übermäßiger Gewalt montiert wird. Es ist dabei besonders zweckmäßig, dass eine solche Sollbruchstelle zu einem Bruch im Bereich von dem oder den Entlüftungskanälen führt, so dass verhindert wird, dass die Luftaufbereitungseinrichtung bei gebrochener Sicherungseinrichtung unter Druck gesetzt wird, wenn diese den Bajonettverschluss nicht mehr zuverlässig sichern kann. Dazu sollte die Bruchstelle derart angeordnet sein, dass sich durch einen Bruch der Sollbruchstelle eine Öffnung des Entlüftungskanals nach außen ergibt.

Das Gehäuse weist eine Führung für die Sicherungseinrichtung auf. Dies erleichtert die Montage der Sicherungseinrichtung. Insbesondere kann die Sicherungseinrichtung eine Mulde sein. Dadurch lassen sich Sicherungseinrichtung sowie die Sicherungseinrichtung haltende Finger eines montierenden Arbeiters gut führen beziehungsweise einführen. Die Führung umgibt einen Endbereich der Sicherungseinrichtung vollständig und stabilisiert so die Sicherungseinrichtung beim Einbauen. Insbesondere kann eine solche Führung eine Bohrung sein. Alternativ kann eine Führung vorgesehen sein, die sowohl eine Mulde als auch ein Element aufweist, das einen Endbereich der Sicherungseinrichtung vollständig umgibt.

Bei einer besonders bevorzugten Weiterbildung weist das Gehäuse einen Anschlag für eine Nase des Bajonettverschlusses auf, der eine Drehung eines Bajonettrings des Bajonettverschlusses in eine Drehrichtung blockiert. Insbesondere ist es zweckmäßig, wenn der Anschlag die Drehung des Bajonettrings in die andere Drehrichtung blockiert als die Sicherungseinrichtung. Der Anschlag kann eine beliebige Nase des Bajonettverschlusses beziehungsweise des Bajonettrings blockieren, insbesondere kann die durch den Anschlag blockierte Nase mit einer durch die Sicherungseinrichtung blockierte Nase identisch oder aber eine andere Nase des Bajonettverschlusses sein.

Ganz besonders vorteilhaft ist es, wenn in einem gesicherten Zustand eine Nase des Bajonettverschlusses zwischen dem Anschlag und der Sicherungseinrichtung angeordnet ist. Dazu kann insbesondere der Abstand zwischen dem Anschlag und der Sicherungseinrichtung derart ausgebildet sein, dass die Nase genau dazwischen passt. Somit lässt sich leicht eine genau definierte Position des Bajonettverschlusses einstellen. Insbesondere können eine nicht korrekte Position des Bajonettverschlusses und damit verbundene Sicherheitsrisikos vermieden werden. Es ist besonders zweckmäßig, dass dann, wenn die Nase nicht korrekt am Anschlag anliegt, die Sicherungseinrichtung nicht am Gehäuse befestigt werden kann, etwa weil die Nase eine Bohrung zur Aufnahme der Sicherungseinrichtung verdeckt, wenn sie nicht korrekt positioniert ist.

Es versteht sich von selbst, dass im Rahmen dieser Beschreibung jede geeignete Art von Bajonettverschlüssen Verwendung finden kann. Gegebenenfalls ist durch mechanische Maßnahmen sicherzustellen, etwa durch eine geeignete Führung des Bajonettrings, dass die Komponenten des Bajonettverschlusses und insbesondere der Bajonettring die korrekte Position annehmen kann, beispielsweise so, dass sich eine Bajonettnase zwischen dem Anschlag und der Sicherungseinrichtung anordnen lässt. Zu derartigen Zwecken geeignete Maßnahmen sind als dem Fachmann bekannt vorausgesetzt. Es ist im Rahmen der Erfindung auch vorstellbar, dass die Lufttrocknereinrichtung von einem zusätzlichen separaten Patronengehäuse abgedeckt ist, das ebenfalls durch den Bajonettverschluss mit dem Gehäuse verbunden sein kann. Es ist auch möglich, dass der Bajonettring fest mit einem Gehäuse der Lufttrocknereinrichtung oder einem solchen Patronengehäuse verbunden ist. Der Bajonettring kann selbstverständlich auch als separates Bauteil ausgebildet sein.

Die Erfindung wird nun mit Bezug auf die begleitenden Zeichnungen beispielhaft erläutert.

Es zeigen:
- Figur 1: eine Darstellung einer Luftaufbereitungseinrichtung;
- Figur 2: eine schematische Querschnittsdarstellung einer Sicherungseinrichtung eines Bajonettverschlusses;
- Figur 3: ein Beispiel für eine Führung einer Verschlussschraube.

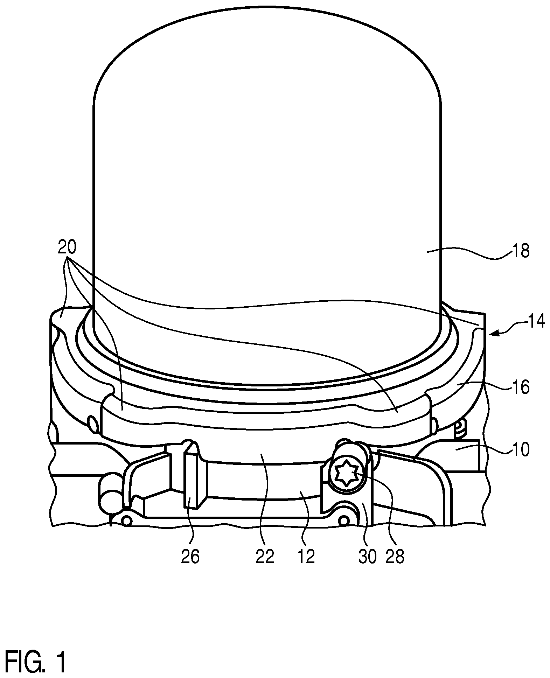

In Figur 1 ist beispielhaft eine Luftaufbereitungseinrichtung 10 mit einem Gehäuse 12 gezeigt. Die Luftaufbereitungseinrichtung 10 ist vermittels eines Bajonettverschlusses 14, der einen Bajonettring 16 aufweist, mit einer Lufttrocknerpatrone 18 verbunden. Die Details der Lufttrocknerpatrone 18 und der Luftaufbereitungseinrichtung 10 werden als bekannt vorausgesetzt und sind daher im Weiteren nicht detaillierter beschrieben.

Der Bajonettring 16 kann Griffvorsprünge 20 aufweisen, die das Drehen des Bajonettrings erleichtern, sowie mindestens eine Bajonettnase 22 auf, die auf bekannte Art mit Nasen beziehungsweise Kragen 24 des Gehäuses 12 und der Lufttrocknerpatrone 18 zusammenwirkt, um durch den Bajonettverschluss 14 Gehäuse 12 und Lufttrocknerpatrone 18 miteinander zu verbinden.

Am Gehäuse 12 ist ferner ein Anschlag 26 vorgesehen. In einem bestimmten Abstand von dem Anschlag 26 befindet sich eine Sicherungseinrichtung, die in diesem Fall als Verschlussschraube 28 ausgebildet ist. Die Verschlussschraube 28 ist in eine nicht erkennbare Gewindebohrung 32 in Gehäuse 12 eingeschraubt. Damit sich die Verschlussschraube leicht einfügen und entfernen lässt, ist eine Mulde 30 vorgesehen. Am vom Gehäuse 12 abgewandten Ende weist die Verschlussschraube 28 eine Profilierung zur Aufnahme eines Werkzeugs zum Montieren oder Demontieren auf.

Der Abstand zwischen Sicherungseinrichtung und Anschlag 26 ist derart gewählt, dass in einem gesicherten Zustand die Nase 22 sich zwischen Anschlag 26 und montierter Sicherungseinrichtung befindet.

In Figur 1 ist der gesicherte Zustand gezeigt, in dem die Sicherungseinrichtung den Bajonettverschluss 14 gegen eine ungewollte Öffnungsbewegung sichert. In diesem Zustand ist die Nase 22 derart angeordnet, dass sie sich zwischen dem Anschlag 26 und der Verschlussschraube 28 befindet. Die Verschlussschraube 28 ist derart angeordnet, dass sie verhindert, dass der Bajonettring 16 gegen den Uhrzeigersinn verdreht wird, da die Nase 22 an der Verschlussschraube 28 anstößt. Der Anschlag 26 verhindert auf der anderen Seite, dass der Bajonettverschluss 14 weiter im Uhrzeigersinn gedreht wird, da die Nase 22 an den Anschlag 26 anstößt. Es kann vorgesehen sein, dass die Nase 22 an beiden anstoßenden Seiten über einen schrägen Anschnitt verfügt. Um die Lufttrocknerpatrone 18 zu entfernen, muss bei der in Figur 1 gezeigten Konstruktion zuerst die Verschlussschraube 28 gelöst und entfernt werden, damit die Nase 22 beim Drehen gegen den Uhrzeigersinn (der Löserichtung in der Figur 1) nicht mehr an ihr anschlägt. Durch den Anschlag 26 lässt sich beim Montieren der Lufttrocknerpatrone 18 der Bajonettring 16 nur so weit im Uhrzeigersinn (in die Montierrichtung) drehen, bis die Nase 22 an dem Anschlag 26 anstößt. Sollte die Lufttrocknerpatrone 18 beim Montieren noch nicht weit genug auf die Luftaufbereitungseinrichtung 10 beziehungsweise deren Gehäuse 12 aufgeschraubt sein, wird die Nase 22 eine in dem Gehäuse 12 vorgesehene Bohrung 32 zur Aufnahme der Verschlussschraube 28 verdecken, so dass sich die Verschlussschraube 28 nicht einführen lässt. Dadurch lässt sich leicht erkennen, dass die Montage noch nicht korrekt durchgeführt ist.

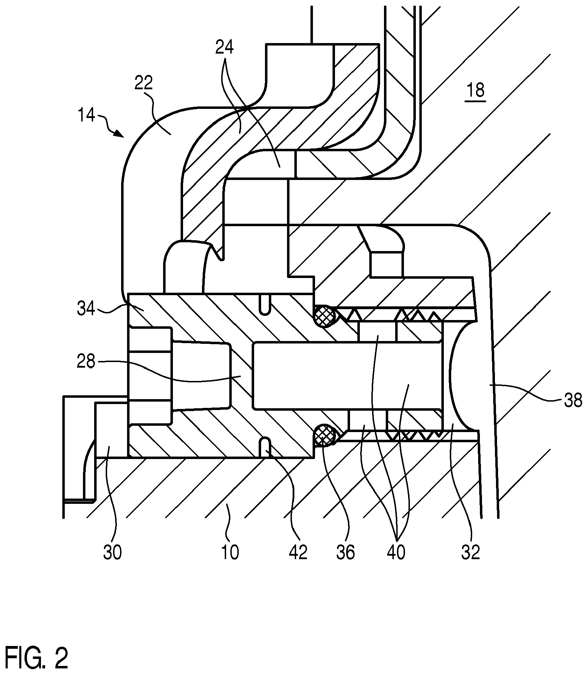

Figur 2 zeigt einen axial geführten Querschnitt der montierten Sicherungseinrichtung sowie des Bajonettverschlusses 14. Die Verschlussschraube 28 verfügt über einen Verschlussschraubenkopf 34, an dem die Nase 22 anstoßen kann. An dem dem Gehäuse 12 der Luftaufbereitungseinrichtung 10 zugewandten Ende des Verschlussschraubenkopfes 28 ist eine Dichtung 36 vorgesehen. Diese dichtet bei korrektem Einbau der Verschlussschraube 28 die Bohrung 32 der Verschlussschraube 28 nach außen ab. Die Bohrung 32 ist als Gewindebohrung ausgebildet. Die Verschlussschraube 28 hat an der der Luftaufbereitungeinrichtung zugewandten Seite ein dieser Bohrung 32 entsprechendes Gewinde. Die Bohrung 32 reicht bis in einen Innenraum 38 des Gehäuses 12 und stellt derart eine Verbindung zu dem im Betrieb unter Druck stehenden Innenraum 38 her. Innerhalb der Verschlussschraube 28 sind Entlüftungskanäle 40 vorgesehen. Insbesondere ist die dem Gehäuse 12 zugewandte Seite der Verschlussschraube 28 teilweise offen, so dass sich Druckluft aus dem Innenraum 38 in die Entlüftungskanäle 40 verteilen kann. Im hier gezeigten gesicherten Zustand sind die Entlüftungskanäle 40 derart angeordnet, dass durch die Dichtung 36 eine Entlüftung verhindert wird. Wird die Verschlussschraube 28 allerdings gelöst, führt die lösende Bewegung der Verschlussschraube 28 dazu, dass die Dichtung 36 nicht länger in Kontakt mit dem Gehäuse 12 steht, und über die Entlüftungskanäle 40 Luft in einen Außenbereich entweichen kann. Dadurch wird der Innenraum 38 entlüftet und die Verschlussschraube 28 kann ohne die Gefahr, dass Druck aus dem Innenraum 38 die Verschlussschraube 28 schlagartig entfernt, von dem Gehäuse 12 gelöst werden.

Ferner gezeigt ist eine Sollbruchstelle 42 der Verschlussschraube 28. Wird zu viel Kraft auf die Verschlussschraube 28 ausgeübt, etwa weil die Montage nicht korrekt erfolgt, führt die Sollbruchstelle 42 zu einem Bruch im Bereich der Entlüftungskanäle 40. Somit wird in diesem Fall auch dann, wenn der untere Bereich der Verschlussschraube 28 derart in der Bohrung 32 verschraubt ist, dass die Dichtung 36 abdichtend wirkt, durch die Entlüftungskanäle 40 eine Entlüftung des Innenraums 38 erreicht. Der Innenraum 38 lässt sich somit nicht unter Druck setzen. Somit lassen sich für diesen Fall Sicherheitsrisiken vermeiden, die damit verbunden sind, dass die Verschlussschraube 28 nicht mehr zur Sicherung des Bajonettverschlusses 14 beziehungsweise des Bajonettrings 16 dient.

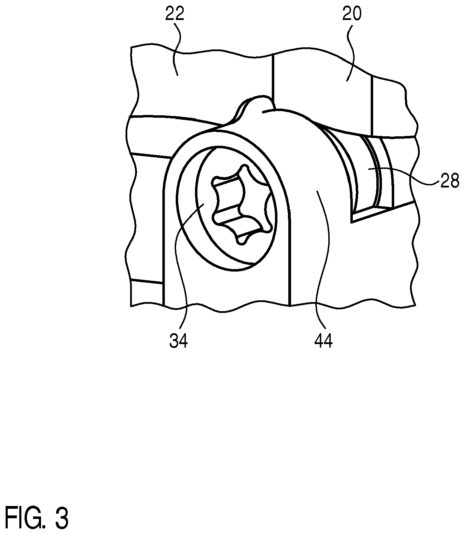

In Figur 3 ist eine Führung 44 der Verschlussschraube 28 gezeigt. Die Führung 44 umgibt einen oberen Teil des Verschlussschraubenkopfes 34 der Verschlussschraube 28 vollständig, so dass sich eine genaue Ausrichtung der Verschlussschraube 28 beim Montieren ergibt. Die Anordnung ist derart dimensioniert, dass bei gelöster und entfernter Verschlussschraube 28 die Führung 44 die Nase 22 des Bajonettrings 14 nicht blockiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Luftaufbereitungseinrichtung
- 12: Gehäuse
- 14: Bajonettverschluss
- 16: Bajonettring
- 18: Lufttrocknerpatrone
- 20: Griffvorsprung
- 22: Bajonettnase
- 24: Nase
- 26: Anschlag
- 28: Verschlussschraube
- 30: Mulde
- 32: Bohrung
- 34: Verschlussschraubenkopf
- 36: Dichtung
- 38: Innenraum
- 40: Entlüftungskanäle
- 42: Sollbruchstelle
- 44: Führung

## Patentansprüche

1. Luftaufbereitungseinrichtung (10) für ein Nutzfahrzeug, mit einem Gehäuse (12), das zum Verbinden mit einer Lufttrocknereinrichtung (18) über einen Bajonettverschluss (14) eingerichtet ist, wobei eine am Gehäuse (12) anbringbare oder angebrachte Sicherungseinrichtung (28) zum Sichern des Bajonettverschlusses (14) am Gehäuse (12) vorgesehen ist, **dadurch gekennzeichnet, dass** das Gehäuse (12) eine Führung (30, 44) für die Sicherungseinrichtung (28) aufweist, welche einen Endbereich der Sicherungseinrichtung (28) vollständig umgibt.

2. Luftaufbereitungseinrichtung nach Anspruch 1, wobei in einem gesicherten Zustand die Sicherungseinrichtung (28) eine Drehung eines Bajonettrings (16) des Bajonettverschlusses (14) in eine Drehrichtung blockiert.

3. Luftaufbereitungseinrichtung nach einem der vorangehenden Ansprüche, wobei in einem gesicherten Zustand die Sicherungseinrichtung (28) an eine Nase (22) des Bajonettverschlusses (14) anstößt.

4. Luftaufbereitungseinrichtung nach einem der vorangehenden Ansprüche, wobei die Sicherungseinrichtung (28) eine Verschlussschraube (28) ist, die einen Verschlussschraubenkopf (34) aufweist, der in einem gesicherten Zustand derart angeordnet ist, dass er eine Drehung einer Nase (22) eines Bajonettrings (16) des Bajonettverschlusses (14) in eine Drehrichtung blockiert.

5. Luftaufbereitungseinrichtung nach einem der vorangehenden Ansprüche, wobei im Gehäuse (12) eine Bohrung (32) zur Aufnahme der Sicherungseinrichtung (28) vorgesehen ist.

6. Luftaufbereitungseinrichtung nach Anspruch 5, wobei die Bohrung (32) bis in einen im Betrieb unter Druck stehenden Innenraum (38) der Luftaufbereitungseinrichtung (10) reicht.

7. Luftaufbereitungseinrichtung nach einem der vorangehenden Ansprüche, wobei die Sicherungseinrichtung (28) in einem gesicherten Zustand die Luftaufbereitungseinrichtung (10) gegen Druckluftverlust abdichtet.

8. Luftaufbereitungseinrichtung nach Anspruch 7, wobei in einem nicht gesicherten Zustand die Sicherungseinrichtung (28) die Luftaufbereitungseinrichtung (10) nicht gegen Druckluftverlust abdichtet.

9. Luftaufbereitungseinrichtung nach einem der vorstehenden Ansprüche, wobei die Sicherungseinrichtung (28) einen oder mehrere Entlüftungskanäle (40) aufweist.

10. Luftaufbereitungseinrichtung nach Anspruch 9, wobei der eine oder die mehreren Entlüftungskanäle (40) derart angeordnet sind, dass sie beim Lösen der Sicherungseinrichtung (28) ein Entlüften der Luftaufbereitungseinrichtung (10) erlauben.

11. Luftaufbereitungseinrichtung nach einem der vorstehenden Ansprüche, wobei die Sicherungseinrichtung (28) mindestens eine Sollbruchstelle (42) aufweist.

12. Luftaufbereitungseinrichtung nach einem der vorstehenden Ansprüche, wobei das Gehäuse (12) einen Anschlag (26) für eine Nase (22) des Bajonettverschlusses (14) aufweist, der eine Drehung des Bajonettverschlusses (14) in eine Drehrichtung blockiert.

13. Luftaufbereitungseinrichtung nach Anspruch 12, wobei die Nase (22) des Bajonettverschlusses (14) in einem gesicherten Zustand zwischen dem Anschlag (26) und der Sicherungseinrichtung (28) angeordnet ist.

## Claims

1. Air treatment device (10) for a commercial vehicle, with a housing (12) which is designed for connection to an air drier device (18) via a quarter turn fastener (14), wherein a securing device (28) which is fittable or is fitted to the housing (12) is provided for securing the quarter turn fastener (14) to the housing (12), **characterized in that** the housing (12) has a guide (30, 44) for the securing device (28), which guide completely surrounds an end region of the securing device (28).

2. Air treatment device according to Claim 1, wherein, in a secured state, the securing device (28) blocks rotation of a quarter turn ring (16) of the quarter turn fastener (14) in one direction of rotation.

3. Air treatment device according to either of the preceding claims, wherein, in a secured state, the securing device (28) butts against a lug (22) of the quarter turn fastener (14).

4. Air treatment device according to one of the preceding claims, wherein the securing device (28) is a closure screw (28) which has a closure screw head (34) which, in a secured state, is arranged in such a manner that it blocks rotation of a lug (22) of a quarter turn ring (16) of the quarter turn fastener (14) in one direction of rotation.

5. Air treatment device according to one of the preceding claims, wherein a bore (32) for receiving the securing device (28) is provided in the housing (12).

6. Air treatment device according to Claim 5, wherein the bore (32) reaches into an interior space (38) of the air treatment device (10), which interior space is pressurized during operation.

7. Air treatment device according to one of the preceding claims, wherein, in a secured state, the securing device (28) seals the air treatment device (10) against a loss of compressed air.

8. Air treatment device according to Claim 7, wherein, in a non-secured state, the securing device (28) does not seal the air treatment device (10) against a loss of compressed air.

9. Air treatment device according to one of the preceding claims, wherein the securing device (28) has one or more venting ducts (40).

10. Air treatment device according to Claim 9, wherein the one venting duct or the more than one venting duct (40) is/are arranged so as to permit venting of the air treatment device (10) when the securing device (28) is released.

11. Air treatment device according to one of the preceding claims, wherein the securing device (28) has at least one predetermined breaking point (42).

12. Air treatment device according to one of the preceding claims, wherein the housing (12) has a stop (26) for a lug (22) of the quarter turn fastener (14), said stop blocking rotation of the quarter turn fastener (14) in one direction of rotation.

13. Air treatment device according to Claim 12, wherein, in a secured state, the lug (22) of the quarter turn fastener (14) is arranged between the stop (26) and the securing device (28).

## Revendications

1. Dispositif (10) de traitement de l'air pour un véhicule utilitaire, comprenant une enveloppe (12) conçue pour être reliée à un dispositif (18) de sécheur d'air par une fermeture (14) à baïonnette, dans lequel il est prévu un dispositif (28) de sécurisation mis sur l'enveloppe (12) ou pouvant l'être, pour sécuriser la fermeture la fermeture (14) à baïonnette à l'enveloppe (12), **caractérisé en ce que** l'enveloppe (12) a un guidage (30, 44) pour le dispositif (28) de sécurisation, qui entoure complètement une partie d'extrémité du dispositif (28) de sécurisation.

2. Dispositif de traitement de l'air suivant la revendication 1, dans lequel, dans un état sécurisé, le dispositif (28) de sécurisation bloque une rotation d'une bague (16) de baïonnette de la fermeture (14) à baïonnette dans un sens de rotation.

3. Dispositif de traitement de l'air suivant l'une des revendications précédentes, dans lequel, dans un état sécurisé, le dispositif (28) de sécurisation heurte un bec (22) de la fermeture (14) à baïonnette.

4. Dispositif de traitement de l'air suivant l'une des revendications précédentes, dans lequel le dispositif (28) de sécurisation est une vis (28) de fermeture, qui a une tête (34) de vis de fermeture, laquelle, dans un état sécurisé, est disposée de manière à bloquer une rotation d'un bec (22) d'une bague (16) de baïonnette de la fermeture (14) à baïonnette dans un sens de rotation.

5. Dispositif de traitement de l'air suivant l'une des revendications précédentes, dans lequel il est prévu dans l'enveloppe (12) un trou (32) de réception du dispositif (28) de sécurisation.

6. Dispositif de traitement de l'air suivant la revendication 5, dans lequel le trou (32) va jusqu'à un espace (38) intérieur sous pression en fonctionnement du dispositif (10) de traitement de l'air.

7. Dispositif de traitement de l'air suivant l'une des revendications précédentes, dans lequel le dispositif (28) de sécurisation rend, dans un état sécurisé, étanche le dispositif (10) de traitement de l'air vis-à-vis d'une perte d'air comprimé.

8. Dispositif de traitement de l'air suivant la revendication 7, dans lequel, dans un état non sécurisé, le dispositif (28) de sécurisation ne rend pas étanche le dispositif (10) de traitement de l'air vis-à-vis d'une perte d'air comprimé.

9. Dispositif de traitement de l'air suivant l'une des revendications précédentes, dans lequel le dispositif (28) de sécurisation a un ou plusieurs conduits (40) de purge.

10. Dispositif de traitement de l'air suivant la revendication 9, dans lequel le un et les plusieurs conduits (40) de purge sont disposés de manière à permettre, lorsque le dispositif (28) de sécurisation est desserré, une purge du dispositif (10) de traitement de l'air.

11. Dispositif de traitement de l'air suivant l'une des revendications précédentes, dans lequel le dispositif (28) de sécurisation a au moins un point (42) destiné à se rompre.

12. Dispositif de traitement de l'air suivant l'une des revendications précédentes, dans lequel l'enveloppe (12) a une butée (26) pour un bec (22) de la fermeture (14) à baïonnette, butée qui bloque une rotation de la fermeture (14) à baïonnette dans un sens de rotation.

13. Dispositif de traitement de l'air suivant la revendication 12, dans lequel le bec (22) de la fermeture (14) à baïonnette est, dans un état sécurisé, disposé entre la butée (26) et le dispositif (28) de sécurisation.
